# EUROPEAN PATENT SPECIFICATION

(11) **EP 3 315 281 B1**
(45) Date of publication and mention of the grant of the patent: **07.08.2019**
(21) Application number: 17198796.9
(22) Date of filing: 27.10.2017
(51) Int. Cl.: B29C 45/17, B29C 45/76

(54) **SORTING DEVICE FOR INJECTION MOLDING PRODUCT AND INJECTION MOLDING SYSTEM**
SORTIERVORRICHTUNG FÜR SPRITZGIESSPRODUKT UND SPRITZGIESSSYSTEM
DISPOSITIF DE TRI POUR PRODUIT DE MOULAGE PAR INJECTION ET SYSTÈME DE MOULAGE PAR INJECTION

(30) Priority: 31.10.2016 JP 2016213819
(43) Date of publication of application: 02.05.2018
(73) Proprietor: Sumitomo Heavy Industries, Ltd., Tokyo 141-6025 (JP)
(72) Inventor: ISHII, Yoshihisa, Chiba-shi, Chiba 263-0001 (JP); SAWAYA, Atsushi, Chiba-shi, Chiba 263-0001 (JP)
(74) Representative: Louis Pöhlau Lohrentz

(56) References cited:
- EP-A1- 0 698 468
- JP-A- H03 266 621
- JP-A- H04 238 013
- JP-A- S60 169 738
- US-A1- 2004 093 115
- ACKERMANN R: "SPRITZGIESSEN MIT AKTIVER QUALITATSUEBERWACHUNG", KUNSTSTOFFE, CARL HANSER VERLAG, MUNCHEN, DE, vol. 81, no. 5, 1 May 1991 (1991-05-01), pages 394-397, XP000287460, ISSN: 0023-5563

## Description

### BACKGROUND OF THE INVENTION

### Field of the Invention

Certain embodiments relate to a sorting device for an injection molding product and an injection molding system.

Priority is claimed to Japanese Patent Application No. 2016-213819, filed October 31, 2016, the entire content of which is incorporated herein by reference.

### Description of Related Art

United States Patent Application US 2004/093115 describes how a determination condition can be set for determining whether a molded product is non-defective or defective. To this end a molding operation is performed a number of times while actual values of machine parameters are detected.

European Patent Application EP 698 468 A1 discloses an apparatus for measuring the weight of a molded article and judging whether the molded article is acceptable or rejective. To this end, the measured weight is compared with a reference weight stored in advance in a memory.

An injection molding system is suggested, which transports molding products taken out from a plurality of injection molding machines to a downstream side by a transport device such as a belt conveyor, sorts the molding products, and packs the sorted molding products in a box (for example, refer to Japanese Patent No. 5863922). In this injection molding system, images of a plurality of molding products and the like are stored in storage means, a type of the transported molding product is identified by an image of the molding product acquired by image acquisition means and an image of the molding product stored in the storage means, and thus, the molding products are sorted.

In the related art, in order to sort the molding products, it is necessary to store information such as the images of the molding products in the storage means in advance, and thus, preparation for starting molding is complicated.

### SUMMARY OF THE INVENTION

The present invention is made in consideration of the above-described problem, and a main object thereof is to provide a sorting device for an injection molding product capable of easily starting molding.

In order to achieve the object, according to an aspect of the present invention, there is provided a sorting device for an injection molding product, including: an extractor which extracts a feature of a molding product molded by an injection molding machine; a storage unit which stores a feature to be compared with the feature extracted by the extractor; and a processing unit which compares the feature extracted by the extractor and the feature stored in the storage unit with each other, in which the processing unit determines whether or not a feature coinciding with the feature extracted by the extractor is stored in the storage unit, and in a case where the coincident feature is not stored in the storage unit, the processing unit stores the feature extracted by the extractor in the storage unit as a new feature.

According to the aspect of the present invention, the sorting device for an injection molding product capable of easily starting molding is provided.

### BRIEF DESCRIPTION OF THE DRAWINGS

Fig. 1 is a diagram showing an injection molding system according to a first embodiment.
Fig. 2 is a diagram showing an injection molding system according to a second embodiment.
Fig. 3 is a diagram showing a state when mold opening of an injection molding machine according to an embodiment is completed.
Fig. 4 is a diagram showing a state when a mold of the injection molding machine according to the embodiment is clamped.
Fig. 5 is a diagram showing a recycling path of a molding material of an injection molding system according to an embodiment.
Fig. 6 is a functional block diagram showing components of a computer of a sorting device according to an embodiment.
Fig. 7 is a table showing a classification result of a classification unit according to an embodiment.
Fig. 8 is a diagram showing an image displayed on a display unit by a classification result display unit according to an embodiment.
Fig. 9 is a diagram showing an image displayed on the display unit by a calculation result display unit according to the embodiment.
Fig. 10 is a diagram showing an image displayed simultaneously with at least one of the image shown in Fig. 8 and the image shown in Fig. 9.

### DETAILED DESCRIPTION OF THE INVENTION

Hereinafter, embodiments of the present invention will be described with reference to the drawings. In each drawing, the same or corresponding reference numerals are assigned to the same or corresponding configurations, and descriptions thereof are omitted.

### First Embodiment

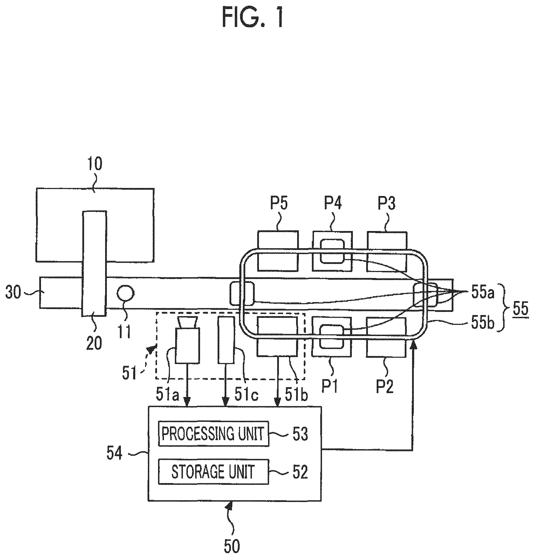

Fig. 1 is a diagram showing an injection molding system according to a first embodiment. The injection molding system includes an injection molding machine 10 which molds a molding product 11, a take-out machine 20 which takes the molding product 11 out from a mold unit attached to the injection molding machine 10, a transport device 30 which transports the molding product 11 taken out by the take-out machine 20, and a sorting device 50 which sorts the molding product 11 transported by the transport device 30.

The injection molding machine 10 includes a mold clamping unit which performs closing, clamping, and opening of the mold unit and an injection unit which fills a molding material inside the mold unit. The injection unit includes a plasticizing cylinder which heats the molding material to melt the molding material. The mold unit includes a stationary mold and a movable mold. When the mold is clamped, a cavity space is formed between the stationary mold and the movable mold, and the cavity space is filled with a liquid molding material by the injection unit. The molding material includes a resin or like. A molten resin filling the cavity space is solidified, and thus, the molding product 11 is obtained. A plurality of cavity spaces may be provided and a plurality of molding products 11 may be simultaneously molded. After the mold is open, the molding product 11 is taken out from the mold unit. The injection molding machine 10 repeatedly molds the molding product 11.

The take-out machine 20 takes the molding product 11 out from the mold unit after the mold is open and passes the molding product 11 to the transport device 30. The molding products 11 may be each passed to the transport device 30 at the same posture. In addition, the molding product 11 maybe passed from the injection molding machine 10 to the transport device 30 by free fall, and in this case, the take-out machine 20 is not required.

The transport device 30 sequentially transports the plurality of molding products 11 to the sorting device 50. The molding products 11 may be each transported to the sorting device 50 at the same posture. For example, a belt conveyor or the like is used as the transport device 30.

The sorting device 50 sorts the molding products 11 according to the feature. The sorting device 50 includes an extractor 51 which extracts the feature of the molding product 11, a storage unit 52 which stores a feature to be compared with the feature extracted by the extractor 51, and a processing unit 53 which compares the feature extracted by the extractor 51 and the feature stored in the storage unit 52 with each other.

For example, the extractor 51 extracts a feature for sorting the plurality of molding products 11 molded by one injection molding machine 10 according to the quality. For example, the feature is an index indicating the quality of the molding product 11 and a physical quantity used for quality inspection of the molding product 11 is used as the feature. For example, as the feature indicating the quality of the molding product 11, an appearance, weight, a temperature, or the like of the molding product 11 is used. The appearance of the molding product 11 includes a size, a shape, a color, or the like of the molding product 11. These features may be used alone or in combination. By using a combination of a plurality of types of features, the quality of the molding product 11 can be sorted finely.

Molding defects that degrade the quality of molding product 11 include burrs, short molding, overpacks, sink marks, warpage, contamination of foreign matters, burning, yellowing, or the like. The burrs are generated by leakage of the molten resin from the cavity space. The short molding is a phenomenon that the molten resin does not spread throughout the entire cavity space. The overpack is a phenomenon that the cavity space is overfilled with the resin. The sink marks are generated by cooling shrinkage of the molten resin. The warpage is a phenomenon which is caused by non-uniform in the shrinkage of the resin. For example, the contamination of foreign matters occurs when the resin burned on an inner wall of the plasticizing cylinder is peeled off. For example, burning occurs when degassing of the cavity space is insufficient, gas is adiabatically compressed, the temperature of the gas increases sharply, and the resin burns out. The yellowing occurs when a residence time of the resin in the plasticizing cylinder is long and the resin deteriorates.

The extractor 51 includes an appearance measurement unit 51a which measures the appearance of the molding product 11. For example, the appearance measurement unit 51a includes an imaging unit which captures an image of the molding product 11 and an image processing unit for image-processing the image captured by the imaging unit. According to the image processing of the molding product 11, the size, shape, color, or the like of the molding product can be measured.

As the imaging unit, a camera such as a Charge Coupled Device (CCD) camera or a Complementary Metal Oxide Semiconductor (CMOS) camera is used. As the image processing unit, a computer or the like is used. A role of the image processing unit may be shared by a computer 54 including the storage unit 52 and the processing unit 53.

In a case where the molding product 11 is a non-defective product, the size or the shape of the molding product 11 coincides with a target value. The target value of the size or shape of the molding product 11 is set based on the size or shape of the cavity space of the mold unit. In addition, in the case where the molding product 11 is a non-defective product, for example, the color of the molding product 11 coincides with a target value in the chromaticity coordinate system. The target value of the color of the molding product 11 is set based on a color unique to the type of the resin.

Moreover, in the present specification, an actual value of the feature such as the size, the shape, or the color "coinciding with the target value" means that the actual value and the target value coincide with each other within an allowable range. In addition, the actual value of the feature "deviating from the target value" means that the actual value is outside the allowable range of the target value. The allowable range is appropriately set according to the use of the molding product 11, the type of the feature, or the like.

Meanwhile, in a case where the molding product 11 is a defective product, the size or shape of the molding product 11 may be deviated from the target value. For example, in a case where the short molding occurs, the size of the molding product 11 is smaller than the target value. In a case where the burrs occur, the size of the molding product 11 is larger than the target value. Moreover, in a case where the warpage occurs, the molding product 11 is distorted, and thus, the shape (for example, deflection amount) of the molding product 11 deviates from the target value . In a case where the burning or the yellowing occurs, the color of the molding product 11 is changed, and thus, the color of the molding product 11 deviates from the target value.

In addition, the extractor 51 includes a weight measurement unit 51b which measures the weight of the molding product 11. As the weight measurement unit, a general weight measurement unit is used. The molding product 11 is transported from the transport device 30 to the weight measurement unit 51b by the transport portion 55. In addition, a dedicated transport device which transports the molding product 11 between the weight measurement unit 51b and the transport device 30 may be provided.

In the case where the molding product 11 is a non-defective product, the weight of the molding product 11 coincides with the target value. For example, the target value of the weight of the molding product 11 is set based on the size or shape of the cavity space of the mold unit, a target density of the resin filling the cavity space, or the like.

Meanwhile, in the case where the molding product 11 is a defective product, the weight of the molding product 11 may deviate from the target value. For example, in a case where the short molding or the sink marks occur, the weight of the molding product 11 is smaller than the target value. In addition, in a case where the burrs or the overpack occur, the weight of the molding product 11 is larger than the target value. The variation in the weight of the molding product 11 is generated by the contamination of foreign matters.

In addition, the extractor 51 includes a temperature measurement unit 51c which measures the temperature of the molding product 11. As the temperature measurement unit 51c, a non-contact type thermometer such as a radiation thermometer is used. However, a contact type thermometer such as a thermocouple may be used.

In the case where the molding product 11 is a non-defective product, the temperature of the molding product 11 coincides with a target value. The target value of the temperature of the molding product 11 is set based on the temperature of the plasticizing cylinder, the residence time of the resin in the plasticizing cylinder, the temperature of the mold unit, an elapsed time until the temperature of the molding product is measured after the molding product is taken out from the mold unit, or the like.

Meanwhile, in the case where the molding product 11 is a defective product, the temperature of the molding product 11 may deviate from the target value. For example, in the case where the burning occurs, the temperature of the molding product 11 is higher than the target value . The variation in the temperature of the molding product 11 may be generated by the short molding, the sink marks, the overpack, or the like. This is because easiness in heat dissipation of the molding product 11 is changed.

For example, the storage unit 52 and the processing unit 53 are configured of the computer 54. The computer 54 includes a Central Processing Unit (CPU), a recording medium such as a memory, an input interface, and an output interface.

The computer 54 realizes various functions by causing the CPU to execute a program stored in the recording medium. The recording medium corresponds to the storage unit 52 and the CPU corresponds to the processing unit 53.

In addition, the computer 54 receives a signal from the outside through the input interface and transmits a signal to the outside through the output interface. For example, the computer 54 receives a signal from the extractor 51 through the input interface and transmits a signal to the transport portion 55 through the output interface.

The storage unit 52 stores the feature to be compared with the feature extracted by the extractor 51. For example, the feature stored in the storage unit 52 includes the target value or the like. Before molding starts, the target value or the like maybe stored in the storage unit 52 in advance . Before the molding starts, the target value may be transmitted from the injection molding machine 10 to the sorting device 50 and may be stored in the storage unit 52.

Moreover, before the molding starts, the feature to be compared with the feature extracted by the extractor 51 may not be stored in the storage unit 52 at all. After the molding starts, the feature to be compared with the feature extracted by the extractor 51 may be stored in the storage unit 52. The types and the number of the features stored in the storage unit 52 are preset.

After the molding starts, the processing unit 53 compares the feature extracted by the extractor 51 and the feature stored in the storage unit 52 with each other. Specifically, first, the processing unit 53 determines whether or not a feature coinciding with the feature extracted by the extractor 51 is stored in the storage unit 52. In a case where a plurality of features are extracted by the extractor 51, the processing unit 53 determines whether or not a combination of a plurality of features coinciding with a combination of the plurality of features is stored in the storage unit 52.

In a case where the feature coinciding with the feature extracted by the extractor 51 is stored in the storage unit 52, it is determined that the molding product 11 subjected to the comparison determination this time has the same feature as that of any one of the molding products 11 subjected to the comparison determination in the past. In addition, the feature extracted by the extractor 51 and the feature stored in the storage unit 52 may coincide with each other within the allowable range. As described above, the allowable range is appropriately set according to the use of the molding product 11, the type of the feature, or the like.

Meanwhile, in a case where the feature coinciding with the feature extracted by the extractor 51 is not stored in the storage unit 52, it is determined that the molding product 11 subjected to the comparison determination this time has a feature different from the feature of any one of the molding products 11 subjected to the comparison determination in the past. In this case, the processing unit 53 stores the feature extracted by the extractor 51 in the storage unit 52 as a new feature. In this case, the processing unit 53 may store the feature extracted by the extractor 51 in the storage unit in association with a transport destination as a new feature. The new feature stored in the storage unit 52 is used for the comparison determination of the next and subsequent times.

As described above, according to the present embodiment, the processing unit 53 determines whether or not the feature coinciding with the feature extracted by the extractor 51 is stored in the storage unit 52. In the case where not the feature coinciding with the feature extracted by the extractor 51 is not stored in the storage unit 52, the processing unit 53 stores the feature extracted by the extractor 51 in the storage unit 52 as the new feature. Accordingly, it is possible to omit a labor of storing the feature used in the comparison determination in the storage unit 52 before the molding starts, and thus, the molding can be easily started.

In addition, according to the present embodiment, in the case where the feature coinciding with the feature extracted by the extractor 51 is not stored in the storage unit 52, the processing unit 53 stores the feature extracted by the extractor 51 in the storage unit 52 in association with a transport destination as a new feature. Accordingly, the transport destination of the molding product 11 can be divided according to the feature of the molding product 11.

Moreover, according to the present embodiment, the extractor 51 extracts the features for sorting the plurality of molding products 11 molded by one injection molding machine 10 according to the quality of the molding product 11.
Accordingly, the molding product 11 can be sorted into the non-defective product and the defective product and the defective product can be sorted more finely according to the feature. As a result, it is possible to manage the type, the degree, the occurrence frequency, or the like of the molding defect.

Next, the storage unit 52 and the processing unit 53 will be further described.

The storage unit 52 stores the feature to be compared with the feature extracted by the extractor 51, according to the transport destination of the molding product 11. Before the molding starts, candidate positions P1 to P5 of the transport destination of the molding product 11 may be stored in the storage unit 52. In Fig. 1, the number of the candidates of the transport destination of the molding product 11 is five. However, the number of the candidates is not particularly limited as long as a plurality of candidates are provided.

After the molding starts, the processing unit 53 compares the feature extracted by the extractor 51 and the feature stored in the storage unit 52 with each other to select the transport destination of the molding product 11.

Specifically, first, the processing unit 53 determines whether or not the feature coinciding with the feature extracted by the extractor 51 is stored in the storage unit 52.

In the case where the plurality of features are extracted by the extractor 51, the processing unit 53 determines whether or not a combination of a plurality of features coinciding with the combination of the plurality of features is stored in the storage unit 52.

In the case where the feature coinciding with the feature extracted by the extractor 51 is stored in the storage unit 52, the transport destination of the molding product 11 subjected to the comparison determination this time has the same transport destination as that of anyone of the molding products 11 subjected to the comparison determination in the past. In addition, the feature extracted by the extractor 51 and the feature stored in the storage unit 52 may coincide with each other within the allowable range. As described above, the allowable range is appropriately set according to the use of the molding product 11, the type of the feature, or the like.

Meanwhile, in the case where the feature coinciding with the feature extracted by the extractor 51 is not stored in the storage unit 52, the transport destination of the molding product 11 subjected to the comparison determination this time becomes a new transport destination different from the transport destination of the molding products 11 subjected to the comparison determination in the past. The new transport destination is selected from the candidate positions of the transport destination stored in the storage unit 52 in advance and is selected from the candidate positions in which the feature used for comparison determination is not registered. In this case, the processing unit 53 stores the feature extracted by the extractor 51 in the storage unit 52 in association with the transport destination as a new feature. The new feature stored in the storage unit 52 is used for the comparison determination of the next and subsequent times.

The sorting device 50 may further include the transport portion 55 which transports the molding product 11 to the transport destination selected by the processing unit 53. Accordingly, it is possible to collect the molding product 11 according to the quality. The non-defective product is boxed and shipped. The defective product is returned to the inspection or is discarded. The defective product may be crushed and reused as a molding material.

For example, the transport portion 55 includes an overhead traveling transport carrier 55a or the like. The overhead traveling transport carrier 55a transports the molding product 11 along a rail 55b provided on a ceiling. Instead of the overhead traveling transport carrier 55a or in addition to the overhead traveling transport carrier 55a, an articulated robot or the like installed on a floor may be used.

In addition, the transport portion 55 may include the transport device 30 in addition to the transport carrier 55a. For example, the transport carrier 55a or the like may pick up the defective product from the transport device 30, and the non-defective product may be transported to another transport destination by the transport device 30. In addition, the transport carrier 55a or the like may pick up the non-defective product from the transport device 30, and the defective product may be transported to another transport destination by the transport device 30.

Moreover, in the present embodiment, the extractor 51 is provided along a transport path on which the transport device 30 transports the molding product. However, the installation position of the extractor 51 is not particularly limited. For example, the extractor 51 may be provided in the take-out machine 20, may be provided in the injection molding machine 10, or may be provided in the mold unit.

In a case where the extractor 51 is provided in the injection molding machine 10, the mold unit, or the take-out machine 20, the transport portion 55 may include the take-out machine 20. The take-out machine 20 may place the non-defective product on the transport path of the transport device 30 or may not place the defective product on the transport path of the transport device 30 to transport the defective product to another transport destination.

### Second Embodiment

In the first embodiment, the plurality of molding products 11 molded by one injection molding machine 10 are sorted according to the quality of the molding product 11. Meanwhile, in the present embodiment, a plurality of molding products 11A to 11C molded by a plurality of injection molding machines 10A to 10C are sorted according to the injection molding machines 10A to 10C. Hereinafter, differences between the first embodiment and the second embodiment will be mainly described.

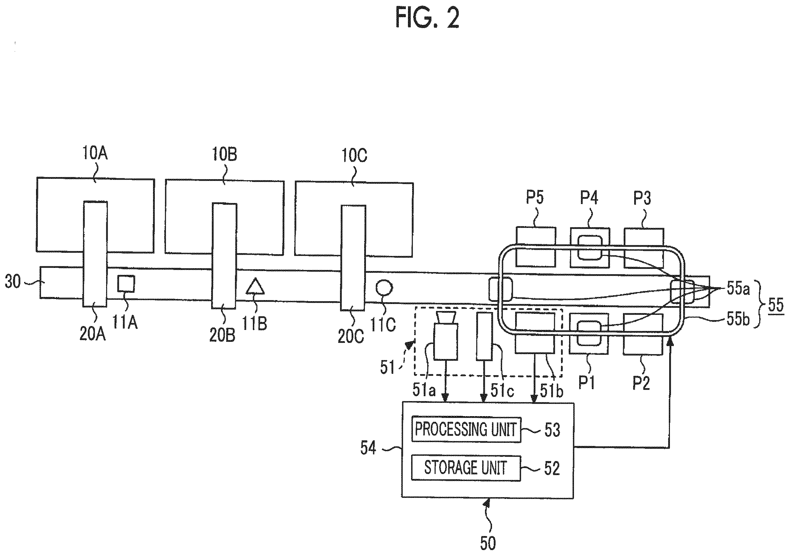

Fig. 2 is a diagram showing an injection molding system according to the second embodiment. The injection molding system includes the plurality of injection molding machines 10A to 10C and a plurality of take-out machines 20A to 20C. The plurality of injection molding machines 10A to 10C are arranged in a transport direction of the transport device 30. The uses of the plurality of molding products 11A to 11C molded by the plurality of injection molding machines 10A to 10C may be different from each other, or the features thereof such as the appearances, the weights, or the temperatures may be different from each other. One transport device 30 transports the plurality of molding products 11A to 11C molded by the plurality of injection molding machines 10A to 10C. The sorting device 50 sorts the plurality of molding products 11A to 11C transported by the one transport device 30 according to the injection molding machines 10A to 10C molding the molding products 11A to 11C.

The sorting device 50 includes the extractor 51, the storage unit 52, and the processing unit 53. In addition, the sorting device 50 further includes the transport portion 55.

For example, the extractor 51 extracts features for sorting thepluralityof molding products 11A to 11C molded by the plurality of inj ection molding machines 10A to 10C according to the injection molding machines 10A to 10C. For example, as the features for sorting the plurality of molding products 11A to 11C according to the injection molding machines 10A to 10C, the appearances, weights, temperatures, or the like of the molding products 11A to 11C are used. The appearances of the molding products 11A to 11C include the sizes, shapes, colors, or the like of the molding products 11A to 11C. These features may be used alone or in combination. By using a combination of a plurality of types of features, accuracy of the sorting can be improved.

The extractor 51 includes the appearance measurement unit 51a which measures the appearance of the molding products 11A to 11C. In a case where the uses or the like of the molding products 11A to 11C are different from each other, the appearances are also different from each other. Accordingly, the injection molding machines 10A to 10C molding the molding product 11A to 11C can be specified based on the appearances of the molding products 11A to 11C.

In addition, the extractor 51 includes the weight measurement unit 51b which measures the weights of the molding products 11A to 11C. In the case where the uses or the like of the molding products 11A to 11C are different from each other, the weights are also different from each other. Accordingly, the injection molding machines 10A to 10C molding the molding product 11A to 11C can be specified based on the weights of the molding products 11A to 11C.

In addition, the extractor 51 includes the temperature measurement unit 51c which measures the temperatures of the molding products 11A to 11C. According to the injection molding machines 10A to 10C, the temperatures of the plasticizing cylinders, the temperatures of the mold units, or the elapsed times until the temperatures of the molding products are measured after the molding products are taken out from the mold units are different from each other. Accordingly, the injection molding machines 10A to 10C molding the molding product 11A to 11C can be specified based on the temperatures of the molding products 11A to 11C.

The storage unit 52 stores features to be compared with the features extracted by the extractor 51 in association with the transport destinations of the molding products 11A to 11C. Before the molding starts, the candidate positions P1 to P5 of the transport destinations of the molding product 11A to 11C may be stored in the storage unit 52. Meanwhile, the features to be compared with the features extracted by the extractor 51 will described in detail later, may not be stored in the storage unit 52 before the molding starts, or may be stored in the storage unit 52 after the molding starts.

After the molding starts, the processing unit 53 compares the features extracted by the extractor 51 and the features stored in the storage unit 52 with each other to select the transport destinations of the molding products 11A to 11C.

Specifically, first, the processing unit 53 determines whether or not the feature coinciding with the feature extracted by the extractor 51 is stored in the storage unit 52. In the case where the plurality of features are extracted by the extractor 51, the processing unit 53 determines whether or not a combination of a plurality of features coinciding with the combination of the plurality of features is stored in the storage unit 52.

In the case where the feature coinciding with the feature extracted by the extractor 51 is stored in the storage unit 52, the transport destination of the molding product subjected to the comparison determination this time has the same transport destination as that of any one of the molding products subjected to the comparison determination in the past. In addition, the feature extracted by the extractor 51 and the feature stored in the storage unit 52 may coincide with each other within the allowable range. As described above, the allowable range is appropriately set according to the use of the molding product 11, the type of the feature, or the like.

Meanwhile, in the case where the feature coinciding with the feature extracted by the extractor 51 is not stored in the storage unit 52, the transport destination of the molding product subjected to the comparison determination this time becomes a new transport destination different from the transport destinations of the molding products subjected to the comparison determination in the past. The new transport destination is selected from the candidate positions of the transport destination stored in the storage unit 52 in advance.

In this case, the processing unit 53 stores the feature extracted by the extractor 51 in the storage unit 52 in association with the transport destination as a new feature. The new feature stored in the storage unit 52 is used for the comparison determination of the next and subsequent times. Accordingly, it is possible to omit a labor of storing the feature used in the comparison determination in the storage unit 52 before the molding starts, and thus, the molding can be easily started.

The transport portion 55 transports the molding products 11A to 11C to the transport destination selected by the processing unit 53. The transport portion 55 includes the transport carrier 55a or the like.
In addition, the transport portion 55 may include the transport device 30 in addition to the transport carrier 55a. For example, the transport carrier 55a or the like may pick up the molding products (for example, the molding products 11A and 11B) molded by some injection molding machines from the transport device 30, and the molding product (for example, the molding product 11C) molded by the remaining injection molding machine may be transported to another transport destination by the transport device 30.

In addition, in the present embodiment, the extractor 51 is provided along a transport path on which the transport device 30 transports the molding product. However, the installation position of the extractor 51 is not particularly limited. For example, the extractor 51 may be provided in the take-out machine 20, may be provided in the injection molding machine 10, or may be provided in the mold unit.

In the case where the extractor 51 is provided in the injection molding machine 10, the mold unit, or the take-out machine 20, the transport portion 55 may include the take-out machine 20. The take-out machine 20 may place the non-defective product on the transport path of the transport device 30 or may not place the defective product on the transport path of the transport device 30 to transport the defective product to another transport destination.

As described above, according to the present embodiment, the extractor 51 extracts the features for sorting the plurality of molding products 11A to 11C molded by the plurality of injection molding machines 10A to 10C according to the injection molding machines 10A to 10C. Accordingly, in a case where the uses of thepluralityof moldingproducts 11A to 11C molded by the plurality of injection molding machines 10A to 10C are different from each other, the molding products 11A to 11C can be sorted according to the use.

The sorting device 50 may sort the plurality of molding products 11A to 11C molded by the plurality of injection molding machines 10A to 10C according to the injection molding machines 10A to 10C or may sort the plurality of molding products 11A to 11C according to the qualities. When the qualities of the molding product molded by one injection molding machine vary, the features of the molding product molded by the one injection molding machine vary. The features of the molding product molded by the one injection molding machine include the features of a plurality of types of quality (for example, non-defective products and defective products). Accordingly, if narrowing down the allowable range to determine that the feature extracted by the extractor 51 and the feature stored in the storage unit 52 coincide with each other, it is possible to sort the plurality of molding products 11A to 11C according to not only the injection molding machine 10A to 10C but also the qualities of the molding products 11A to 11C. In addition, the types of the qualities are not limited to two types such as the non-defective product and the defective product and may be three or more types.

In addition, the uses of the molding products 11A to 11C may be the same as each other, or the appearances or the weights thereof may be the same as each other. In this case, even when the temperatures of the plasticizing cylinders in the injection molding machines 10A to 10C are the same as each other or the temperatures of the mold units are the same as each other, if the injection molding machines 10A to 10C are arranged along the transport direction of the transport device 30, the elapsed times until the temperatures of the molding products are measured after being taken out from the mold units are different from each other. Accordingly, the injection molding machines 10A to 10C molding the molding products 11A to 11C can be specified based on the temperatures of the molding products 11A to 11C. Therefore, for example, an injection molding machine having a high defect rate can be specified.

### Modification Example

Hereinbefore, embodiments of the sorting device for an injection molding product are described. However, the present invention is not limited to the embodiments or the like, and various modifications and improvements can be applied within a scope of the present invention described in claims.

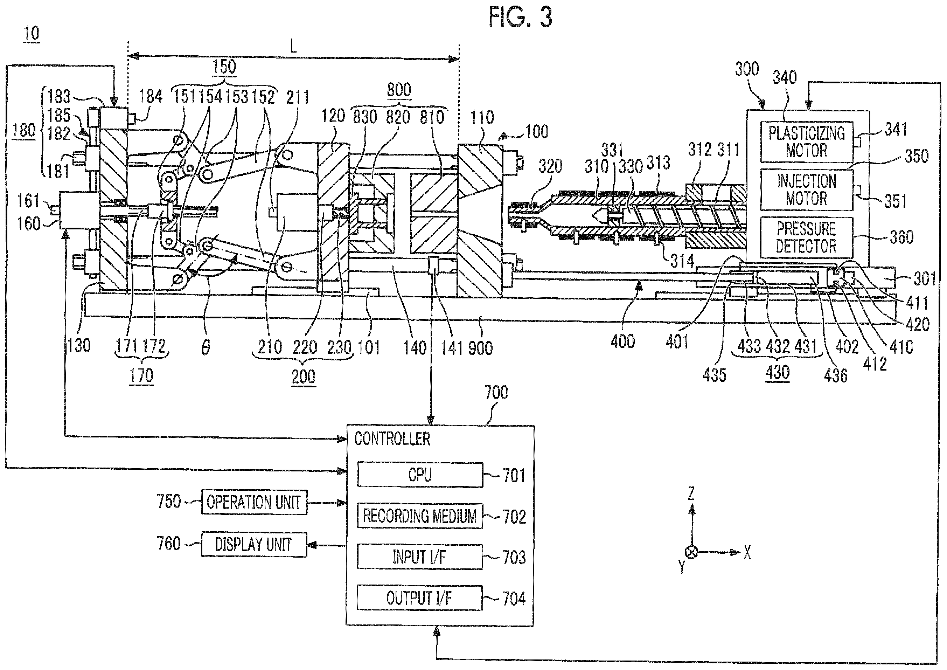

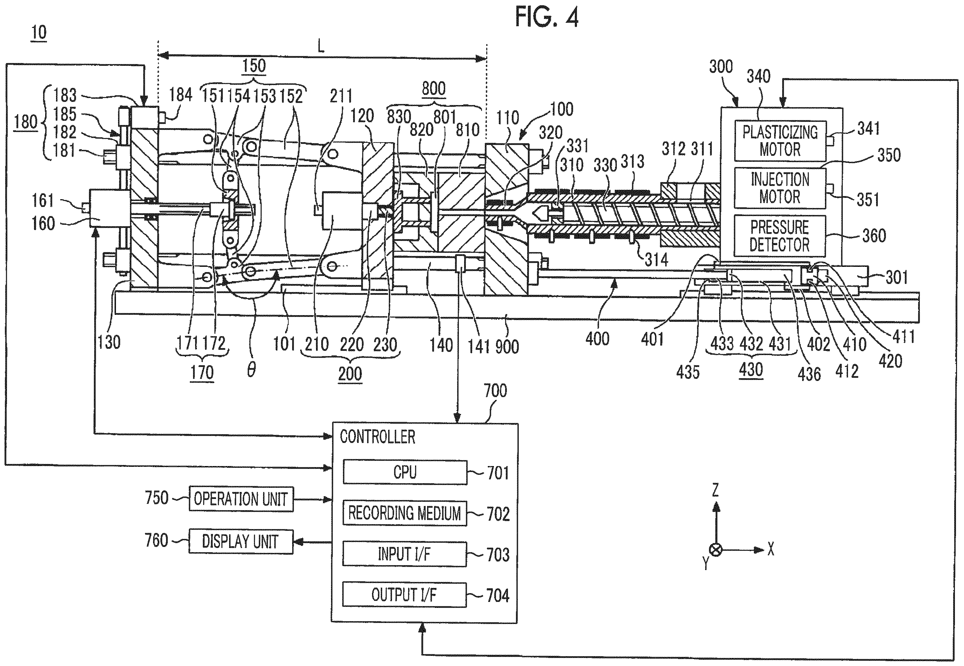

Fig. 3 is a diagram showing a state when mold opening of an injection molding machine according to an embodiment is completed. Fig. 4 is a diagram showing a state when a mold of the injection molding machine according to the embodiment is clamped. In Figs. 3 and 4, an X direction, a Y direction, and a Z direction are directions perpendicular to each other. The X direction and the Y direction indicate a horizontal direction and the Z direction indicates a vertical direction. In a case where a mold clamping unit 100 is a horizontal type mold clamping unit, the X direction is mold opening and closing directions and the Y direction is a width direction of the injection molding machine.

The injection molding machine 10 includes the mold clamping unit 100, an ejector unit 200, an injection unit 300, a movement unit 400, a controller 700, and a frame 900. Hereinafter, each component of the injection molding machine 10 will be described. Moreover, each of the injection molding machines 10A, 10B, and 10C shown in Fig. 2 has the same configuration as that of the injection molding machine 10 shown in Fig. 1, and thus, descriptions of the injection molding machines 10A, 10B, and 10C are omitted.

In the descriptions of the mold clamping unit 100, a movement direction (right direction in Figs. 3 and 4) of a movable platen 120 when a mold is closed is defined as a front side, and a movement direction (left direction in Figs. 3 and 4) of the movable platen 120 when the mold is open is defined as a rear side.

The mold clamping unit 100 performs closing, clamping, and opening of a mold unit 800. For example, the mold clamping unit 100 is a horizontal type clamping unit and mold opening and closing directions thereof are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold thickness adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or backward with respect to the stationary platen 110, and thus, closing, clamping, and opening of the mold are performed. The mold unit 800 is configured of the stationary mold 810 and the movable mold 820.

The toggle support 130 is connected to the stationary platen 110 with a gap, and is placed on the frame 900 to be movable in mold opening and closing directions. In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other by the tie bar 140 with a gap L in the mold opening and closing directions. Aplurality of (forexample, four) tie bars 140 may be used. The tie bars 140 are parallel to each other in the mold opening and closing directions and extend according to a mold clamping force. A tie bar strain detector 141 which detects strain of the tie bar 140 is provided in at least one tie bar 140. The tie bar strain detector 141 sends signals indicating the detection results to the controller 700. The detection results of the tie bar strain detector 141 are used for the detection of the mold clamping force or the like.

In addition, in the present embodiment, as the mold clamping force detector which detects the mold clamping force, the tie bar strain detector 141 is used. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which is bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or backward with respect to the toggle support 130, the first link 152 and the second link 153 are bent and stretched and the movable platen 120 moves forward or backward with respect to the toggle support 130.

In addition, the configuration of the toggle mechanism 150 is not limited to the configuration shown in Figs. 3 and 4. For example, in Figs. 3 and 4, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or backward with respect to the toggle support 130, and thus, the first links 152 and the second links 153 are bent and stretched, and the movable platen 120 moves forward or backward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700. In addition, a crosshead position detector which detects the position of the crosshead 151 and a crosshead speed detector which detects the speed of the crosshead 151 are not limited to the mold clamping motor encoder 161 and can use a general detector. Moreover, a movable platen position detector which detects the position of the movable platen 120 and a movable platen speed detector which detects the speed of the movable platen 120 are not limited to the mold clamping motor encoder 161 and can use a general detector.

In the mold clamping process, the mold clamping motor 160 is further driven to further move the crosshead 151 forward from the mold closing completion position to a mold clamping position, and thus, a mold clamping force is generated. When the mold is clamped, a cavity space 801 is formed between the movable mold 820 and the stationary mold 810, and the cavity space 801 is filled with a liquid molding material by the injection unit 300. The filled molding material is solidified, and thus, a molding product is obtained. A plurality of cavity spaces 801 may be provided, and in this case, a plurality of molding products may be simultaneously obtained.

In the mold opening process, the mold clamping motor 160 is driven to move the crosshead 151 backward to a mold opening completion position at a set speed. Accordingly, the movable platen 120 moves backward, and the movable mold 820 is separated from the stationary mold 810. Thereafter, the ejector unit 200 ejects the molding product from the movable mold 820.

The setting conditions in the mold closing process and the mold clamping process are collectively set as a series of setting conditions. For example, the speed or the positions (including a mold closing start position, a speed switching position, a mold closing completion position, and a mold clamping position) of the crosshead 151 and the mold clamping force in the mold closing process and the mold clamping process are collectively set as a series of setting conditions. The mold closing start position, the speed switching position, the mold closing completion position, and the mold clamping completion position are arranged in this order from the rear side toward the front side, and indicate a start point or an end point of a section where the speed is set. The speed is set for each section. One speed switching position or a plurality of speed switching positions may be provided. The speed switching position may be not set. Any one of the mold clamping position and the mold clamping force may be set.

In the mold opening process, the setting conditions are similarly set. For example, the speed or the positions (including a mold opening start position, a speed switching position, and a mold opening completion position) of the crosshead 151 in the mold opening process are collectively set as a series of setting conditions. The mold opening start position, the speed switching position, and the mold opening completion position are arranged in this order from the front side toward the rear side, and indicate a start point or an end point of a section where the speed is set. The speed is set for each section. One speed switching position or a plurality of speed switching positions may be provided. The speed switching position may be not set. The mold opening start position and the mold clamping position may be the same as each other. In addition, the mold opening completion position and the mold closing start position may be the same as each other.

Moreover, instead of the speed, the position, or the like of the crosshead 151, the speed, the position, or the like of the movable platen 120 may be set. In addition, instead of the position (for example, the mold clamping position) of the crosshead or the position of the movable platen, the mold clamping force may be set.

The toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a thickness of the mold unit 800 is changed by replacement of the mold unit 800, a temperature change of the mold unit 800, or the like, a mold thickness adjustment is performed such that a predetermined mold clamping force is obtained when the mold is clamped. For example, in the mold thickness adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold thickness adjustment mechanism 180 which performs the mold thickness adjustment by adjusting the gap L between the stationary platen 110 and the toggle support 130. The mold thickness adjustment mechanism 180 includes a screw shaft 181 which is formed on the rear end portion of the tie bar 140, a screw nut 182 which is rotatably supported by the toggle support 130, and a mold thickness adjustment motor 183 which rotates the screw nut 182 screwed to the screw shaft 181.

The screw shaft 181 and the screw nut 182 are provided for each tie bar 140. A rotation of the mold thickness adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold thickness adjustment motor 183, and an intermediate gear which engages with the plurality of driven gears and drive gears is rotatably held by a center portion of the toggle support 130. In addition, the rotation transmission portion 185 may be configured of a belt, a pulley, or the like instead of the gear.

An operation of the mold thickness adjustment mechanism 180 is controlled by the controller 700. The controller 700 drives the mold thickness adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 is fixed to the stationary platen 110 and the tie bar 140 is rotatably held with respect to the toggle support 130. In this case, the gap L can be adjusted by rotating the tie bar 140.

The gap L is detected using a mold thickness adjustment motor encoder 184. The mold thickness adjustment motor encoder 184 detects a rotation amount or a rotation direction of the mold thickness adjustment motor 183 and sends signals indicating the detection results to the controller 700. The detection results of the mold thickness adjustment motor encoder 184 is used to control the position of the toggle support 130 or to monitor or control the gap L. In addition, a toggle support position detector which detects the position of the toggle support 130 and a gap detector which detects the gap L are not limited to the mold thickness adjustment motor encoder 184 and can use a general detector.

The mold thickness adjustment mechanism 180 rotates one of the screw shaft 181 and the screw nut 182 engaging with each other to adjust the gap L. A plurality of mold thickness adjustment mechanisms 180 may be used, and a plurality of mold thickness adjustment motor 183 may be used.

Moreover, in order to adjust the gap L, the mold thickness adjustment mechanism 180 of the present embodiment includes the screw shaft 181 formed on the tie bar 140 and the screw nut 182 screwed to the screw shaft 181. However, the present invention is not limited to this.

For example, the mold thickness adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140. The tie bar temperature controller may include a cooler such as a water cooling jacket and may control the temperature of the tie bar 140 by cooling. The tie bar temperature controller may include both the heating unit and the cooler.

The mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions . The vertical type mold clamping unit includes a lower platen, an upper platen, a toggle support, a tie bar, a toggle mechanism, a mold clamping motor, or the like. Any one of the lower platen and the upper platen is used as a stationary platen and the other is used as a movable platen . A lower mold is attached to the lower platen and an upper mold is attached to the upper platen. The lower mold and the upper mold configure the mold unit. The lower mold may be attached to the lower platen via a rotary table. The toggle support is disposed below the lower platen and is connected to the upper platen via the tie bar. The upper platen and the toggle support are connected to each other with a gap in the mold opening and closing directions by the tie bar. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

Like the descriptions of the mold clamping unit 100, in descriptions of the ejector unit 200, the movement direction (right direction in Figs. 3 and 4) of the movable platen 120 when the mold is closed is defined as a front side, and the movement direction (left direction in Figs. 3 and 4) of the movable platen 120 when the mold is open is defined as a rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or backward through a through-hole of the movable platen 120.
A front end portion of the ejector rod 230 comes into contact with a movable member 830 which is disposed to be movable forward or backward inside the movable mold 820. The front end portion of the ejector rod 230 may be connected to the movable member 830 or may not be connected to the movable member 830.

The ejector unit 200 performs an ejection process under the control of the controller 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 backward at a set speed, and thus, the movable member 830 moves backward to an original position. For example, a position or speed of the ejector rod 230 is detected using an ejector motor encoder 211. The ejector motor encoder 211 detects the rotation of the ejector motor 210 and sends signals indicating the detection results to the controller 700. In addition, an ejector rod position detector which detects the position of the ejector rod 230 and an ejector rod speed detector which detects the speed of the ejector rod 230 are not limited to the ejector motor encoder 211 and can use a general detector.

Unlike the descriptions of the mold clamping unit 100 or the descriptions of the ejector unit 200, in descriptions of the injection unit 300, a movement direction (left direction in Figs. 3 and 4) of a screw 330 during filling is referred to as a front side, and a movement direction (right direction in Figs. 3 and 4) of the screw 330 during plasticizing is referred to as a rear side.

The injection unit 300 is installed on a slide base 301 which is movable forward or backward with respect to the frame 900, and is movable forward or backward with respect to the mold unit 800. The injection unit 300 comes into contact with the mold unit 800, and fills the cavity space 801 inside the mold unit 800 with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inside of the cylinder 310. For example, the molding material includes a resin or the like. For example, the molding material is formed in a pellet shape and is supplied to the supply port 311 in a solid state. The supply port 311 is formed on the rear portion of the cylinder 310. The cooler 312 such as a water cooling cylinder is provided on an outer periphery of the rear portion of the cylinder 310. A heating unit 313 such as a band heater and a temperature detector 314 are provided on the outer periphery of the cylinder 310 on the front side of the cooler 312.

The cylinder 310 is divided into a plurality of zones in an axial direction (right and left directions in Figs. 3 and 4) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on a front end portion of the cylinder 310 and presses the mold unit 800. The heating unit 313 and the temperature detector 314 are provided on the outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or backward. If the screw 330 rotates, the molding material is fed forward along spiral grooves of the screw 330. The molding material is gradually melted by heat of the cylinder 310 while being fed forward. The liquid molding material is fed to the front portion of the screw 330 and is accumulated in the front portion of the cylinder 310, and thus, the screw 330 moves backward. Thereafter, if the screw 330 moves forward, the liquid molding material in front of the screw 330 is injected from the nozzle 320 and fills the inside of the mold unit 800.

Abackflow prevention ring 331 is attached to a front portion of the screw 330 to be movable forward or backward as a backflow prevention valve which prevents backflow of the molding material from the front side of the screw 330 toward the rear side when the screw 330 is pressed toward the front side.

When the screw 330 moves forward, the backflow prevention ring 331 is pressed toward the rear side by the pressure of the molding material in front of the screw 330 and moves backward relative to the screw 330 to a close position (refer to Fig. 4) at which the flow path of the molding material is closed. Accordingly, the molding material accumulated in front of the screw 330 is prevented from flowing toward the rear side.

Meanwhile, when the screw 330 rotates, the backflow prevention ring 331 is pressed toward the front side by the pressure of the molding material fed forward along the spiral grooves of the screw 330 and moves backward relative to the screw 330 to an open position (refer to Fig. 3) at which the flow path of the molding material is open. Accordingly, the molding material is fed to the front side of the screw 330.

The backflow prevention ring 331 may be either a co-rotation type ring which rotates with the screw 330 or a non-co-rotation type ring which does not rotate with the screw 330.

In addition, the injection unit 300 may include a drive source which moves the backflow prevention ring 331 forward or backward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or backward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or backward is not limited to the injection motor 350 and may be a hydraulic cylinder, for example.

The pressure detector 360 detects a pressure transmitted between the injection motor 350 and the screw 330. The pressure detector 360 is provided on a force transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching maybe performed. Immediately before the V/P switching, instead of stopping the screw 330, the screw 330 may move forward or may move backward at a very slow speed. In addition, a screw position detector which detects the position of the screw 330 and a screw speed detector which detects the speed of the screw 330 are not limited to the injection motor encoder 351 and can use a general detector.

In the holding pressure process, the injection motor 350 is driven to press the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage inside the mold unit 800. For example, the holding pressure is detected using the pressure detector 360. The pressure detector 360 sends signals indicating the detection results to the controller 700. The set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, the inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material inside the cavity space 801 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves backward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends signals indicating the detection results to the controller 700. In addition, a screw rotating speed detector which detects the rotating speed of the screw 330 is not limited to the plasticizing motor encoder 341 and can use a general detector.

In the plasticizing process, in order to restrict an abrupt backward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 moves backward to a plasticizing completion position and a predetermined amount of the molding materials is accumulated in front of the screw 330, the plasticizing process ends.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or backward in the plasticizing cylinder and a plunger is disposed to be movable forward or backward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

Similarly to the descriptions of the injection unit 300, in descriptions of the movement unit 400, the movement direction (left direction in Figs. 3 and 4) of the screw 330 during filling is referred to as a front side, and the movement direction (right direction in Figs. 3 and 4) of the screw 330 during plasticizing is referred to as a rear side.

The movement unit 400 moves the injection unit 300 forward or backward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pressed forward. The injection unit 300 moves forward, and the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pressed backward. The injection unit 300 moves backward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

For example, the controller 700 is configured of a computer, and as shown in Figs. 3 and 4, includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like between the molding clamping processes. A series of operations to obtain the molding product, for example, operations from the start of the plasticizing process to the start of the next plasticizing process is referred to as a "shot" or a "molding cycle". In addition, a time required for once shot is also referred to as a "molding cycle time".

For example, once molding cycle includes the plasticizing process, the mold closing process, the mold clamping process, the filling process, the holding pressure process, the cooling process, the mold opening process, and the ejection process in this order. Here, this order is the order of the start of each process. The filling process, the holding pressure process, and the cooling process are performed from the start of the mold clamping process to the end of the mold clamping process. The end of the mold clamping process coincides with the start of the mold opening process. Moreover, in order to shorten the molding cycle time, the plurality of process maybe simultaneously performed. For example, the plasticizing process may be performed during the cooling process of the previous molding process, andinthiscase, the mold closing process may be performed at the beginning of the molding cycle. Moreover, the filling process may start during the mold closing process . In addition, the ejection process may start during the mold opening process. In a case where an on-off valve which opens and closes the flow path of the nozzle 320 is provided, the mold opening process may start during the plasticizing process. This is because even when the mold opening process starts during the plasticizing process, the molding material does not leak from the nozzle 320 as long as the on-off valve closes the flow path of the nozzle 320.

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700.

The operation screen is used for the setting of the injection molding machine 10 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 10 or the like.

For example, the operation unit 750 and the display unit 760 may be configured of a touch panel to be integrated with each other. Inaddition, in the present embodiment, the operation unit 750 and the display unit 760 are integrated with each other. However, the operation unit 750 and the display unit 760 may be provided to be independent to each other. In addition, a plurality of operation units 750 may be provided.

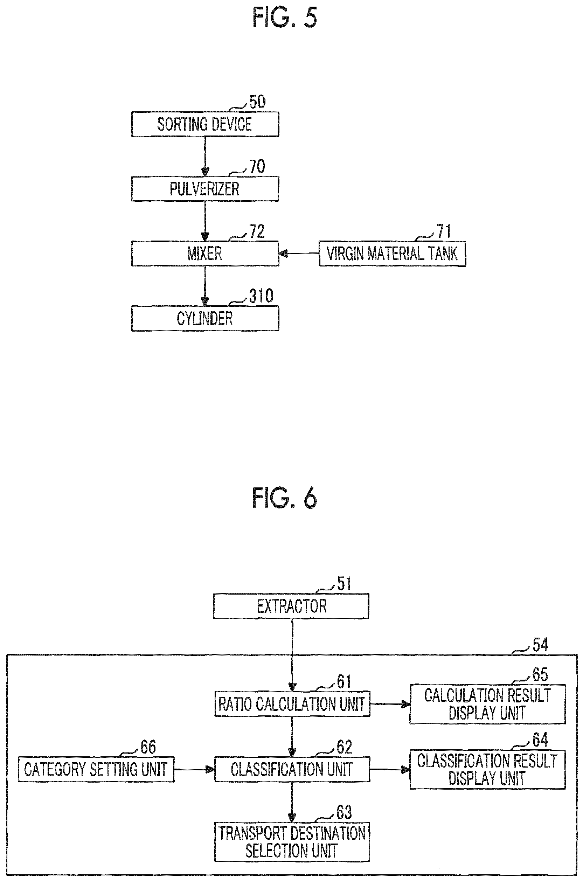

Fig. 5 is a diagram showing a recycling path of a molding material of an injection molding system according to an embodiment. As shown in Fig. 5, the injection molding system includes a pulverizer 70 which pulverizes a defective molding product sorted by the sorting device 50 to produce a recycled material and a mixer 72 which mixes the recycled material produced by the pulverizer 70 and a virgin material supplied from a virgin material tank 71 at a predetermined ratio. As the pulverizer 70 or the mixer 72, a general pulverizer or a general mixer is used. The injection molding system supplies a mixed material of the recycled material and the virgin material at a predetermined ratio in the mixer 72 to the supply port 311 (refer to Figs. 3 and 4) of the cylinder 310 as a molding material. Unlike the recycled material, the virgin material has no history heated in the cylinder 310 or no history filled in the mold unit 800, and thus, is produced by a pelletizer or the like, for example.

Fig. 6 is a functional block diagram showing components of a computer of the sorting device according to the embodiment. Each functional block shown in Fig. 6 is conceptual and does not necessarily need to be configured as shown physically. It is possible to configure all or some of the functional blocks by functionally or physically dispersing and integrating in arbitrary units. All or some of processing functions performed in functional blocks can be realized by a program executed by the CPU or can be realized as hardware by wired logic.

As shown in Fig. 6, the sorting device 50 includes a ratio calculation unit 61 which calculates a ratio (hereinafter, simply referred to as a "ratio") of the actual value of the feature extracted by the extractor 51 with respect to the target value. "Calculating the ratio of the actual value with respect to the target value" also includes determining to which category of categories (categories will be described later) set by the ratio to the target value the actual value belongs. For example, the feature for calculating the ratio by the ratio calculation unit 61 includes the size, the shape (including bending), the color, the weight, the temperature, or the like of the molding product 11 used to indicate the quality of the molding product 11.

The target value of the size or the shape of the molding product 11 is set based on the size of the shape of the cavity space 801 of the mold unit 800. For example, the target value of the weight of the molding product 11 is set based on the size or the shape of the cavity space 801 of the mold unit 800, a target density of the resin filling the cavity space 801, or the like. The target value of the temperature of the molding product 11 is set based on the temperature of the cylinder 310, the residence time of the resin inside the cylinder 310, the temperature of the mold unit 800, the elapsed time until the temperature of the molding product 11 is measured after the molding product 11 is taken out from the mold unit 800, or the like.

For example, the ratio calculated by the ratio calculation unit 61 may be represented by a percentage. 100% in the ratio indicates that the actual value coincides with the target value. The ratio is calculated for each feature (for example, size, shape, color, weight, temperature). The ratio is used for classification or the like of the actual value and is also used for selection of the transport destination of the molding product 11.

As shown in Fig. 6, the sorting device 50 includes a classification unit 62 which classifies the actual value of the feature extracted by the extractor 51 into any one of a plurality of preset categories according to the ratio extracted by the ratio calculation unit 61. The classification unit 62 specifies the category to which the actual value belongs based on the ratio of the actual value to the target value. The number of the categories and a range of each category are preset. The number of the categories and the range of each category may be uniformly set for all the features or may be set independently. The number of the categories and the range of each category are described in detail later, but may be appropriately changed.

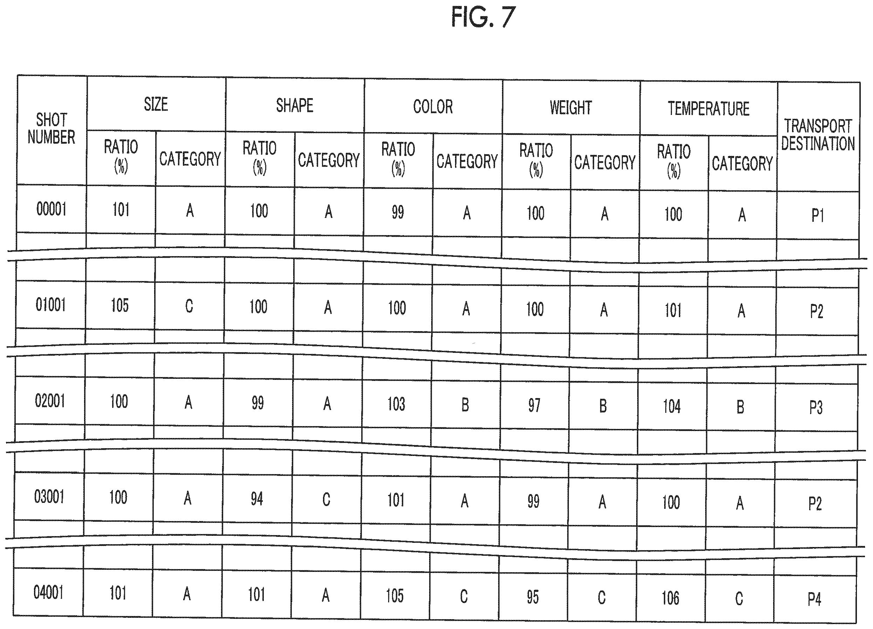

Fig. 7 is a table showing a classification result of the classification unit according to an embodiment. In Fig. 7, a range of a category A is a range in which the ratio is 98% to 102%, a range of a category B is a range in which the ratio is equal to or more than 96% and less than 98% and is equal to or more than 102% and less than 104%, a range of a category C is a range in which the ratio is equal to or more than 94% and less than 96% and is equal to or more than 104% and less than 106%. Moreover, the number of the categories is not limited to three. In addition, the range of each category is not limited to the above-described range. In Fig. 7, instead of the ratio (processed data) of the actual value with respect to the target value, raw data of the actual value may be represented, or both the processed data of the actual value and the raw data of the actual value may be represented to be arranged.

As shown in Fig. 7, the classification unit 62 classifies the actual values of the features extracted by the extractor 51 into any one of the plurality of preset categories according to the ratio calculated by the ratio calculation unit 61. The classification performed by the classification unit 62 is performed for each feature (for example, size, shape, color, weight, and temperature) and is stored in the storage unit 52 in association with a shot number or the like. The classification result of the classification unit 62 will be described in detail later and is used for the selection of the transport destination of the molding product 11 or the like.

As shown in Fig. 6, the sorting device 50 may include a transport destination selection unit 63 which selects the transport destination of the molding product 11 based on the classification result of the classification unit 62. For example, the transport destination selection unit 63 selects an actual transport destination from the four transport destinations P1 to P4 shown in Fig. 7 based on the classification result of the classification unit 62. In Fig. 7, the transport destination P1 is a destination for shipping, the transport destinations P2 and P3 are destinations for recycling, and the transport destination P4 is a destination for discarding.

The molding product 11 transported to the transport destination P1 for shipping is shipped as a non-defective product. The molding product 11 transported to the transport destinations P2 and P3 for recycling is pulverized by the pulverizer 70 and is used as a recycled material. In the molding product 11 transported to the transport destination P4 for discarding, a degradation degree of the resin is outside an allowable range as the recycled material, and thus, the molding product 11 is not used as the recycled material to be discarded.

In addition, in the present embodiment, the number of the transport destinations for recycling is two. However, the number may be three or more or one. Moreover, the transport destination for recycling may not present, and in this case, the transport destination selection unit 63 selects an actual transport destination from the transport destination for shipping and the transport destination for discarding. In addition, the use of the transport destination is not limited to the shipping, recycling, or discarding application, and for example, may be a precision inspection application or the like. The molding product 11 transported to the transport destination for precision inspection is inspected by a precision inspection machine and is transported to any one of the transport destinations for shipping, recycling and discarding based on the inspection results.

In a case where the transport destination selection unit 63 includes the transport destination for recycling as the transport destination of the molding product 11 as an option, the transport destination selection unit 63 may use the classification result of the actual value of color for selection of the transport destination. The color of the molding product 11 indicates the degradation degree of the resin, and thus, the transport destination can be selected according to the degradation degree of the resin.

In a case where the actual value of the color is classified into the category A, the transport destination selection unit 63 selects the transport destination P1 for shipping or the transport destination P2 for recycling. Which one of the transport destination P1 and the transport destination P2 for recycling is selected is determined based on the classification result of the actual value of the feature other than the color.

For example, in a case where the actual values of all features except for the color are classified into the category A, the transport destination selection unit 63 selects the transport destination P1 for shipping. Meanwhile, in a case where the actual value of at least one the feature except for the color is classified into the category B or the category C, the transport destination selection unit 63 selects the transport destination P2 for recycling.

In a case where the actual value of the color is classified into the category B, the transport destination selection unit 63 selects the transport destination P3 for recycling. Moreover, in a case where the actual value of the color is classified into the category C, the transport destination selection unit 63 selects the transport destination P4 for discarding.

In the transport destination P2 for recycling and the transport destination P3 for recycling, the degradation degrees of the resins of the collected molding products 11 are different from each other. Accordingly, the injection molding system may set a mixing ratio between the recycled material and the virgin material based on the transport destinations P2 and P3 of the molding products 11 which are raw materials of the recycled material. The quality of the molding material obtained by mixing the recycled material and the virgin material can be maintained in a constant range.

The molding product 11 collected in the transport destination P3 for recycling deteriorates compared with the molding product 11 collected in the transport destination P2 for recycling. Accordingly, compared to a case where the transport destination of the molding product 11 which is the raw material of the recycled material is P2, in a case where the transport destination of the molding product 11 which is the raw material of the recycled material is P3, the ratio of the recycled material in the molding material obtained by mixing the recycled material and the virgin material is set small.

As described above, the classification result of the classification unit 62 may be used for setting molding conditions such as the mixing ratio of the recycled material and the virgin material. In addition, as described later, the classification result of the classification unit 62 may be used for analyzing an occurrence timing of failure of the molding product 11, a degree of the failure, and a state (for example, degradation degree) of the injection molding machine 10.

As shown in Fig. 6, the sorting device 50 may include a classification result display unit 64 which displays the classification result of the classification unit 62 on the display unit. As a display unit which displays the classification result of the classification unit 62, a general display unit such as a liquid crystal display is used. As the display unit which displays the classification result of the classification unit 62, the display unit 760 of the injection molding machine 10 may be used.

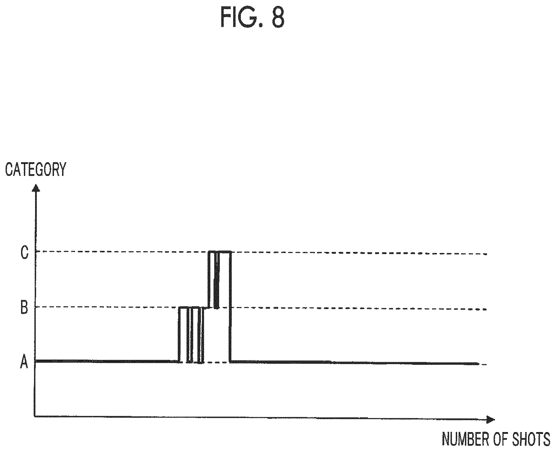

Fig. 8 is a diagram showing an image displayed on a display unit by a classification result display unit according to an embodiment. In Fig. 8, a vertical axis indicates the classification result of the classification unit 62 and a horizontal axis indicates the number of shots. The number of shots indicates the elapsed time.

As shown in Fig. 8, for example, the classification result display unit 64 displays a time-dependent change of the classification result of the classification unit 62 on the display unit. The image displayed on the display unit is prepared for each feature (for example, size, shape, color, weight, temperature).

A user who views the image shown in Fig. 8 can analyze the occurrence timing of failure of the molding product 11, the degree of the failure, the state of the injection molding machine 10, or the like. In addition, instead of the image shown in Fig. 8, the classification result display unit 64 may display the image shown in Fig. 7 on the display unit.

As shown in Fig. 6, the sorting device 50 may include a calculation result display unit 65 which displays the calculation result of the ratio calculation unit 61 on the display unit. As a display unit which displays the calculation result of the ratio calculation unit 61, a general display unit such as a liquid crystal display is used. As the display unit which displays the calculation result of the ratio calculation unit 61, the display unit 760 of the injection molding machine 10 may be used.

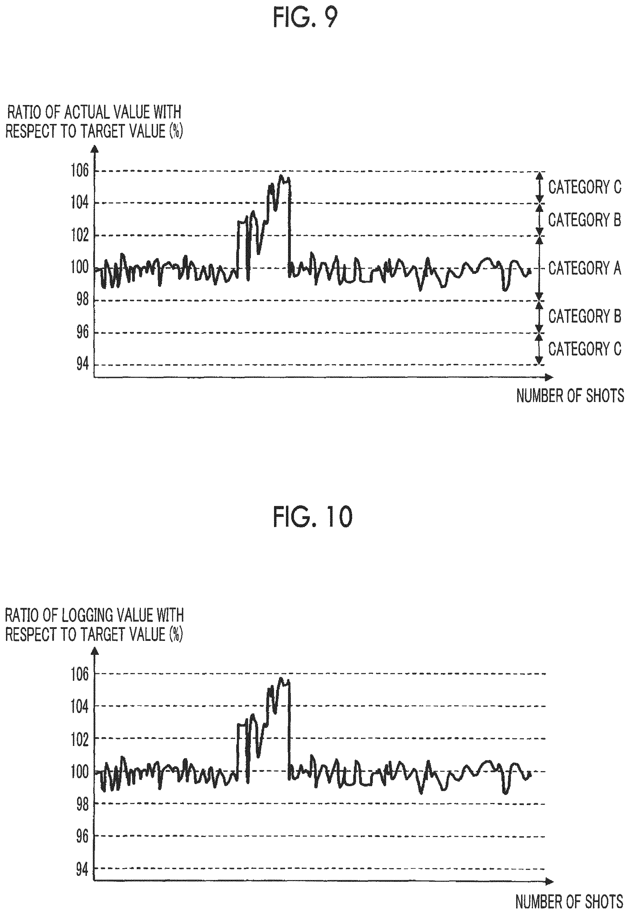

Fig. 9 is a diagram showing the image displayed on the display unit by the calculation result display unit according to the embodiment. In Fig. 9, a vertical axis indicates the calculation result of the ratio calculation unit 61 and a horizontal axis indicates the number of shots. The number of shots indicates the elapsed time. A "ratio" in the vertical axis of Fig. 9 may be displayed by the target value and the actual value. In this case, the categories A to C or the like may be set by the ratio of the target value and to which category of the categories set by the ratio the actual value belongs may be displayed. Calculating the ratio of the actual value of the feature extracted by the extractor with respect to the target value includes determining to which category of the categories set by the ratio to the target value a detection value belongs. The image shown in Fig. 9 may be simultaneously displayed with the image shown in Fig. 8 or may be displayed to be switched from the image shown in Fig. 8.

As shown in Fig. 9, for example, the calculation result display unit 65 displays a time-dependent change of the calculation result of the ratio calculation unit 61 on the display unit. The image displayed on the display unit is prepared for each feature (for example, size, shape, color, weight, temperature).

A user who views the image shown in Fig. 9 can analyze the occurrence timing of failure of the molding product 11, the degree of the failure, the state of the injection molding machine 10, or the like. In addition, instead of the image shown in Fig. 9, the calculation result display unit 65 may display the image shown in Fig. 7 on the display unit.

Fig. 10 is a diagram showing an image displayed simultaneously with at least one of the image shown in Fig. 8 and the image shown in Fig. 9. In Fig. 10, a vertical axis indicates a ratio of a logging value with respect to the target value, and a horizontal axis indicates the number of shots. The number of shots indicates the elapsed time. In Fig. 10, instead of the ratio (processed data) of the logging value with respect to the target value, raw data of the logging value may be displayed, and both the processed data of the logging value and the raw data of the logging value may be displayed.

The logging value is an actual value of a physical quantity used for controlling the molding operation of the injection molding machine 10. For example, the physical quantity used for controlling the molding operation includes a time, a position, a pressure, a force, a temperature, or the like. The time includes a mold cycle time, a mold closing time, a mold opening time, a filling time, a plasticizing time, or the like. The position includes the position of the crosshead, the position of the screw, or the like. The pressure includes an injection pressure or the like. The force includes a mold clamping force or the like. The temperature includes the temperature of the cylinder or the like.

The image shown in Fig. 10 is simultaneously displayed with at least one of the image shown in Fig. 8 and the image shown in Fig. 9. By simultaneously displaying the logging value used for controlling the molding operation and the actual value of the feature indicating the quality of the molding product 11, a relationship between the state of the machine and the quality of the molding product can be understood.

The logging value of the image shown in Fig. 10 may be appropriately selected according to the type of the feature of the image shown in Fig. 8 or 9.

In addition, in the present embodiment, the image shown in Fig. 10 is simultaneously displayed with at least one of the image shown in Fig. 8 and the image shown in Fig. 9. However, the image shown in Fig. 10 may be displayed to be separated from the image shown in Fig. 8 or the image shown in Fig. 9.

As shown in Fig. 6, the sorting device 50 may include a category setting unit 66 which sets the category used in the classification unit 62. The category setting unit 66 sets the number of the categories or the range of each category. The of the categories or the range of each category may be according to a command of a user or may be set based on statistics of the actual values. For example, as the statistics of actual value, the maximum value of differences between the actual value and the target value, a variance of the actual values, a standard deviation of the actual values, or the like is used.

In a case where the setting change of the category is performed, the classification unit 62 may classify the actual value as a new category. This classification result is reflected to the image (refer to Fig. 8) generated by the classification result display unit 64 or the image (refer to Fig. 9) generated by the calculation result display unit 65.

### Brief Description of the Reference Symbols

- 10:: injection molding machine
- 20:: take-out machine
- 30:: transport device
- 50:: sorting device
- 51:: extractor
- 51a:: appearance measurement unit
- 51b:: weight measurement unit
- 51c:: temperature measurement unit
- 52:: storage unit
- 53:: processing unit
- 54:: computer
- 55:: transport portion
- 61:: ratio calculation unit
- 62:: classification unit
- 63:: transport destination selection unit
- 64:: classification result display unit
- 65:: calculation result display unit
- 66:: category setting unit

## Claims

1. A sorting device (50) for an injection molding product (11), comprising:
an extractor (51) which is configured to extract a feature value of a molding product (11) molded by an injection molding machine (10);
a storage unit (52) which stores a feature value to be compared with the feature value extracted by the extractor (51) ; and
a processing unit (53) which is configured to compare whether the feature value extracted by the extractor (51) and the feature value stored in the storage unit (52) coincide with each other or deviate from each other,
wherein the processing unit (53) is configuredto determine whether or not a feature value coinciding with the feature value extracted by the extractor (51) is stored in the storage unit (52), and in a case where the coincident feature value is not stored in the storage unit (52), the processing unit (53) stores the feature value extracted by the extractor (51) in the storage unit (52) as a new feature value that can be used for the comparison determination of the next and subsequent times.

2. The sorting device (50) for an injection molding product (11) according to claim 1,
wherein in a case where the coincident feature value is not stored in the storage unit (52), the processing unit (53) is configured to store the feature value extracted by the extractor (51) in the storage unit (52) in association with a transport destination as a new feature value.

3. The sorting device (50) for an injection molding product (11) according to claim 1 or 2,
wherein the storage unit (52) is configured to store the feature value to be compared with the feature value extracted by the extractor (51) in association with a transport destination of the molding product (11), and
wherein the processing unit (53) is configured to compare the feature value extracted by the extractor (51) and the feature value stored in the storage unit (52) with each other to select the transport destination of the molding product (11).

4. The sorting device (50) for an injection molding product (11) according to claim 3, further comprising:
a transport portion (55) which transports the molding product (11) to the transport destination selected by the processing unit (53).

5. The sorting device (50) for an injection molding product (11) according to any one of claims 1 to 4,
wherein the extractor (51) is configured to extract a feature value for sorting a plurality of the molding products (11) formed by one injection molding machine (10) according to a quality of the molding product (11).

6. The sorting device (50) for an injection molding product (11) according to claim 5, further comprising:
a ratio calculation unit (61) which is configured to calculate a ratio of an actual value of the feature extracted by the extractor (51) with respect to a target value.

7. The sorting device (50) for an injection molding product (11) according to any one of claim 1 to 6,
wherein the extractor (51) is configured to extract a feature value for sorting a plurality of the molding products (11) formed by a plurality of the injection molding machines (10) according to the injection molding machine (10).

8. An injection molding system, comprising:
the sorting device (50) for an injection molding product (11) according to any one of claim 1 to 7; and
the injection molding machine (10).

## Patentansprüche

1. Sortiervorrichtung (50) für ein Spritzgießerzeugnis (11), umfassend:
eine Extrahiereinrichtung (51), die konfiguriert ist, einen Merkmalswert eines Gießerzeugnisses (11), das durch eine Spritzgießmaschine (10) gegossen wird, zu extrahieren;
eine Speichereinheit (52), die einen Merkmalswert speichert, der mit dem Merkmalswert verglichen werden soll, der durch die Extrahiereinrichtung (51) extrahiert wird; und
eine Verarbeitungseinheit (53), die konfiguriert ist zu vergleichen, ob der Merkmalswert, der durch die Extrahiereinrichtung (51) extrahiert wird, und der Merkmalswert, der in der Speichereinheit (52) gespeichert ist, miteinander übereinstimmen oder voneinander abweichen,
wobei die Verarbeitungseinheit (53) konfiguriert ist zu bestimmen, ob ein Merkmalswert, der mit dem Merkmalswert übereinstimmt, der durch die Extrahiereinrichtung (51) extrahiert worden ist, in der Speichereinheit (52) gespeichert ist oder nicht, und die Verarbeitungseinheit (53) in einem Fall, wenn der übereinstimmende Merkmalswert nicht in der Speichereinheit (52) gespeichert ist, den Merkmalswert, der durch die Extrahiereinrichtung (51) extrahiert worden ist, als einen neuen Merkmalswert, der für die Vergleichsbestimmung der nächsten und darauffolgenden Male verwendet werden kann, in der Speichereinheit (52) speichert.

2. Sortiervorrichtung (50) für ein Spritzgießerzeugnis (11) nach Anspruch 1,
wobei in einem Fall, wenn der übereinstimmende Merkmalswert nicht in der Speichereinheit (52) gespeichert ist, die Verarbeitungseinheit (53) konfiguriert ist, den Merkmalswert, der durch die Extrahiereinrichtung (51) extrahiert worden ist, in Assoziierung mit einem Beförderungsziel als einen neuen Merkmalswert in der Speichereinheit (52) zu speichern.

3. Sortiervorrichtung (50) für ein Spritzgießerzeugnis (11) nach Anspruch 1 oder 2,
wobei die Speichereinheit (52) konfiguriert ist, den Merkmalswert, der mit dem Merkmalswert verglichen werden soll, der durch die Extrahiereinrichtung (51) extrahiert wird, in Assoziierung mit einem Beförderungsziel des Gießerzeugnisses (11) zu speichern, und
wobei die Verarbeitungseinheit (53) konfiguriert ist, den Merkmalswert, der durch die Extrahiereinrichtung (51) extrahiert wird, und den Merkmalswert, der in der Speichereinheit (52) gespeichert ist, miteinander zu vergleichen, um das Beförderungsziel des Gießerzeugnisses (11) auszuwählen.

4. Sortiervorrichtung (50) für ein Spritzgießerzeugnis (11) nach Anspruch 3, weiter umfassend:
einen Beförderungsabschnitt (55), der das Gießerzeugnis (11) zu dem Beförderungsziel befördert, das durch die Verarbeitungseinheit (53) ausgewählt wird.

5. Sortiervorrichtung (50) für ein Spritzgießerzeugnis (11) nach einem der Ansprüche 1 bis 4,
wobei die Extrahiereinrichtung (51) konfiguriert ist, einen Merkmalswert zum Sortieren einer Mehrzahl der Gießerzeugnisse (11), die durch eine Spritzgießmaschine (10) gebildet werden, gemäß einer Qualität des Gießerzeugnisses (11) zu extrahieren.

6. Sortiervorrichtung (50) für ein Spritzgießerzeugnis (11) nach Anspruch 5, weiter umfassend:
eine Verhältnisberechnungseinheit (61), die konfiguriert ist, ein Verhältnis eines tatsächlichen Wertes des Merkmales, der durch die Extrahiereinrichtung (51) extrahiert wird, in Bezug auf einen Zielwert zu berechnen.

7. Sortiervorrichtung (50) für ein Spritzgießerzeugnis (11) nach einem der Ansprüche 1 bis 6,
wobei die Extrahiereinrichtung (51) konfiguriert ist, einen Merkmalswert zum Sortieren einer Mehrzahl der Gießerzeugnisse (11), die durch eine Mehrzahl der Spritzgießmaschinen (10) gebildet worden sind, gemäß der Spritzgießmaschine (10) zu extrahieren.

8. Spritzgießsystem, umfassend:
die Sortiervorrichtung (50) für ein Spritzgießerzeugnis (11) nach einem der Ansprüche 1 bis 7; und
die Spritzgießmaschine (10).

## Revendications

1. Un dispositif de tri (50) pour un produit de moulage par injection (11), comprenant :
un extracteur (51) qui est configuré pour extraire une valeur caractéristique d'un produit de moulage (11) moulé par une machine de moulage par injection (10) ;
une unité de stockage (52) qui stocke une valeur caractéristique à comparer avec la valeur caractéristique extraite par l'extracteur (51) ;
et
une unité de traitement (53) qui est configurée pour déterminer si la valeur caractéristique extraite par l'extracteur (51) et la valeur caractéristique stockée dans l'unité de stockage (52) coïncident ou divergent,
dans lequel l'unité de traitement (53) est configurée pour déterminer si une valeur caractéristique qui coïncide avec la valeur caractéristique extraite par l'extracteur (51) est stockée dans l'unité de stockage (52), et, si la valeur caractéristique coïncidente n'est pas stockée dans l'unité de stockage (52), l'unité de traitement (53) stocke la valeur caractéristique extraite par l'extracteur (51) dans l'unité de stockage (52) comme une nouvelle valeur caractéristique qui peut être utilisée pour la détermination par comparaison la fois suivante et les fois ultérieures.

2. Le dispositif de tri (50) pour un produit de moulage par injection (11) selon la revendication 1,
dans lequel, lorsque la valeur caractéristique coïncidente n'est pas stockée dans l'unité de stockage (52), l'unité de traitement (53) est configurée pour stocker la valeur caractéristique extraite par l'extracteur (51) dans l'unité de stockage (52) en association avec une destination de transport comme une nouvelle valeur caractéristique.

3. Le dispositif de tri (50) pour un produit de moulage par injection (11) selon la revendication 1 ou 2,
dans lequel l'unité de stockage (52) est configurée pour stocker la valeur caractéristique à comparer avec la valeur caractéristique extraite par l'extracteur (51) en association avec une destination de transport du produit de moulage (11), et
dans lequel l'unité de traitement (53) est configurée pour comparer la valeur caractéristique extraite par l'extracteur (51) et la valeur caractéristique stockée dans l'unité de stockage (52) afin de sélectionner la destination de transport du produit de moulage (11).

4. Le dispositif de tri (50) pour un produit de moulage par injection (11) selon la revendication 3, comprenant en outre :
une partie de transport (55) qui transporte le produit de moulage (11) vers la destination de transport sélectionnée par l'unité de traitement (53).

5. Le dispositif de tri (50) pour un produit de moulage par injection (11) selon l'une quelconque des revendications 1 à 4,
dans lequel l'extracteur (51) est configuré pour extraire une valeur caractéristique afin de trier une pluralité de produits de moulage (11) formés par une machine de moulage par injection (10) selon une qualité du produit de moulage (11).

6. Le dispositif de tri (50) pour un produit de moulage par injection (11) selon la revendication 5, comprenant en outre :
une unité de calcul de rapport (61) qui est configurée pour calculer un rapport entre une valeur réelle de la caractéristique extraite par l'extracteur (51) et une valeur cible.

7. Le dispositif de tri (50) pour un produit de moulage par injection (11) selon l'une quelconque des revendications 1 à 6,
dans lequel l'extracteur (51) est configuré pour extraire une valeur caractéristique afin de trier une pluralité de produits de moulage (11) formés par une pluralité de machines de moulage par injection (10) selon la machine de moulage par injection (10).

8. Un système de moulage par injection, comprenant :
le dispositif de tri (50) pour un produit de moulage par injection (11) selon l'une quelconque des revendications 1 à 7 ;
la machine de moulage par injection (10).
